# DEMANDE DE BREVET EUROPEEN

(11) **EP 1 744 525 A2**
(43) Date de publication de la demande: **17.01.2007**
(21) Numéro de dépôt: 06116606.2
(22) Date de dépôt: 05.07.2006
(51) Int. Cl.: H04M 3/42

(54) **Configuration à distance d'un terminal de télécommunication**

(30) Priorité: 13.07.2005 FR 0507531
(71) Demandeur: FRANCE TELECOM, 75015 Paris (FR)
(72) Inventeur: Gimeno, Agnès, 38570, Tencin (FR); Gimeno, Vincent, 38570, Tencin (FR); Garcia, Didier, 92190, Meudon (FR)
(74) Mandataire: Cabinet Plasseraud

(57) **Abrégé**

Procédé de modification de paramètres opérationnels mémorisés dans une mémoire d'un premier terminal (TF), dans un réseau (2, 3, 3') comportant une pluralité de terminaux (TF, TG), comprenant une étape de réception de données qui comportent une indication de modification relative à un paramètre opérationnel mémorisé dans le premier terminal, la « au moins une » indication étant fournie par un deuxième terminal ; une étape de commande de la modification indiquée ; et une étape de mémorisation dans la mémoire du premier terminal du paramètre opérationnel modifié conformément à l'indication de modification.

## Description

La présente invention concerne le domaine de la configuration de terminaux utilisateurs tels que les téléphones fixes, les ordinateurs, les téléphones mobiles, les téléviseurs, les assistants personnels etc., qui sont reliés à un réseau, par exemple un réseau téléphonique, ADSL, IP, GSM, etc.

Les terminaux utilisateurs ont des fonctionnalités de plus en plus diverses et étendues, ce qui a pour conséquence qu'ils deviennent de plus en plus complexes à utiliser et notamment de plus en plus complexes à régler lors d'une première utilisation.

Parmi les personnes les plus affectées par cette complexité croissante figurent notamment les personnes âgées. Celles-ci font fréquemment appel à un parent pour les aider à paramétrer leur téléphone fixe par exemple, notamment les touches du terminal correspondant à des numéros à enregistrer, les numéros d'urgence, le choix de la mélodie de sonnerie, le nombre de sonneries avant basculement sur messagerie, l'heure, le message vocal etc.

Toutefois, lors de son fonctionnement, le terminal utilisateur est adapté pour exploiter des paramètres réglables en les extrayant d'une mémoire locale au terminal dans laquelle ils sont mémorisés. Ainsi le parent auquel la personne âgée fait appel doit se rendre dans le lieu où se trouve le terminal pour effectuer les réglages et enregistrer dans cette mémoire locale les valeurs souhaitées des paramètres. Ceci constitue un inconvénient, notamment pour les personnes âgées qui se trouvent éloignées de leurs proches.

La présente invention vise à proposer une solution pour pallier cet inconvénient.

A cet effet, suivant un premier aspect, l'invention propose un procédé de modification de paramètres opérationnels mémorisés dans une mémoire d'un premier terminal, dans un réseau comportant une pluralité de terminaux et une unité de commande à distance comprenant une mémoire.

Le procédé comprend les étapes préalables suivantes :
- détermination, par l'unité de commande, d'un ensemble de paramètres opérationnels modifiables parmi les paramètres opérationnels stockés dans le premier terminal, en fonction au moins d'une étape d'analyse de la configuration du premier terminal réalisée lors d'une connexion entre l'unité de commande à distance et ledit premier terminal, et
- mémorisation dudit ensemble de paramètres dans l'unité, en association avec l'identifiant du premier terminal et de l'ensemble de paramètres modifiables ;
   le procédé comprenant les étapes suivantes :

- réception de données, par l'unité, comportant au moins une indication de modification, associée à l'identifiant du premier terminal et relative à au moins un paramètre opérationnel mémorisé dans ledit premier terminal, la « au moins une » indication étant fournie par un deuxième terminal ;
- commande par l'unité de la modification indiquée ; et
- mémorisation dans la mémoire du premier terminal du paramètre opérationnel modifié conformément à l'indication de modification.

Un procédé selon l'invention permet donc à l'utilisateur du premier terminal de déléguer la gestion des paramètres opérationnels (initialisation, modification, suppression de valeurs de paramètres) enregistrés localement au premier terminal à une personne distante qui est l'utilisateur du deuxième terminal.

Les paramètres opérationnels sont des paramètres de configuration du terminal utilisateur. Les valeurs attribuées à ces paramètres conditionnent le fonctionnement du terminal.

Les paramètres opérationnels mémorisés localement et dont la gestion peut être déléguée selon l'invention sont par exemple la mémorisation de numéros d'urgence, le paramétrage de touches, du message vocal, de l'heure, du volume...

Avantageusement, l'étape de commande de la modification comporte une étape de synchronisation entre la mémoire du premier terminal et la mémoire de l'unité de commande.

Dans un autre mode de réalisation, la configuration à distance du premier terminal est effectuée directement depuis le deuxième terminal, sans l'intermédiaire d'une unité de commande à distance.

La détermination de l'ensemble de paramètres opérationnels modifiables par l'unité est réalisée en fonction au moins d'une étape d'analyse de la configuration du premier terminal réalisée lors d'une connexion entre l'unité et ledit terminal. Cette disposition a pour effet de pouvoir mettre en oeuvre l'invention dans un parc hétérogène de terminaux comportant des technologies variées, et de proposer à l'utilisateur du premier terminal une prise en charge par un tiers de paramètres qui seront effectivement aptes à être modifiés avec succès par ce tiers.

Avantageusement, la détermination de l'ensemble de paramètres opérationnels modifiables par l'unité est réalisée en fonction au moins de choix indiqués par l'utilisateur du premier terminal à l'unité, qui désigne ainsi les paramètres dont il souhaite déléguer la gestion. Ainsi le service de délégation de la gestion de paramètres opérationnels locaux au premier terminal est modulable en fonction des souhaits de chaque utilisateur.

Dans un mode de réalisation, les données comportent en outre l'identification de l'utilisateur du deuxième terminal, le procédé comprenant une étape de vérification de ladite identification.

Dans un mode de mise en oeuvre, l'unité comporte un journal de suivi des modifications et suite à la mémorisation d'une modification dans le premier terminal, le procédé met en oeuvre une étape de mise à jour de ce journal. L'historique des modifications relatives au premier terminal est donc tracé, et peut être utilisé par exemple en cas de contestation par l'utilisateur du terminal.

Suivant un second aspect, l'invention propose une unité de commande à distance pour la configuration de terminaux d'utilisateurs, comprenant :
- des moyens de raccordement à un réseau pour la mise en relation avec une pluralité de terminaux d'utilisateurs ;
- des moyens de détermination d'un ensemble de paramètres opérationnels modifiables parmi des paramètres opérationnels stockés dans un premier des terminaux d'utilisateurs, en fonction au moins d'une étape d'analyse de la configuration du premier terminal réalisée lors d'une connexion entre l'unité de commande à distance et ledit premier terminal ;
- des moyens de mémorisation de l'ensemble de paramètres opérationnels modifiables déterminé en association avec un identifiant dudit premier terminal ;
- des moyens de réception d'un identifiant et d'au moins une indication de modification relative à au moins un paramètre opérationnel mémorisé dans le premier terminal ;
- des moyens de connexion pour connecter l'unité au premier terminal identifié par l'identifiant reçu et commander la modification indiquée dans le premier terminal.

Suivant un troisième aspect, l'invention propose un terminal comportant :
- des moyens de mémorisation de paramètres opérationnels ;
- des moyens de raccordement à un réseau ; et
- des moyens pour permettre une analyse de la configuration du terminal par une unité distante connectée par l'intermédiaire du réseau ;
- des moyens pour mettre à jour, conformément à une indication de modification reçue par l'intermédiaire du réseau, au moins un paramètre opérationnel mémorisé dans les moyens de mémorisation.

Suivant un quatrième aspect, l'invention propose un programme d'ordinateur à installer dans une unité de commande à distance pour exécution par au moins un processeur de ladite unité, l'unité comportant des moyens de raccordement à un réseau pour la mise en relation avec une pluralité de terminaux utilisateurs. Le programme comprend des instructions pour effectuer les traitements suivants lors d'une exécution par le processeur :
- dans une étape préalable, détermination d'un ensemble de paramètres opérationnels modifiables parmi des paramètres opérationnels stockés dans un premier terminal, en fonction au moins d'une étape d'analyse de la configuration du premier terminal réalisée lors d'une connexion entre l'unité de commande à distance et ledit premier terminal ;
- réception d'un identifiant du premier terminal utilisateur et d'au moins une indication de modification relative à au moins un paramètre opérationnel mémorisé dans ledit premier terminal ;
- commande de la modification indiquée dans le premier terminal lors d'une connexion de l'unité de commande à distance au premier terminal identifié par l'identifiant reçu.

D'autres caractéristiques et avantages de l'invention apparaîtront encore à la lecture de la description qui va suivre. Celle-ci est purement illustrative et doit être lue en regard des dessins annexés sur lesquels :
- la figure 1 représente un système de communication où l'invention est mise en oeuvre; et
- la figure 2 représente les différentes étapes d'un procédé selon l'invention mis en oeuvre dans le système de la figure 1.

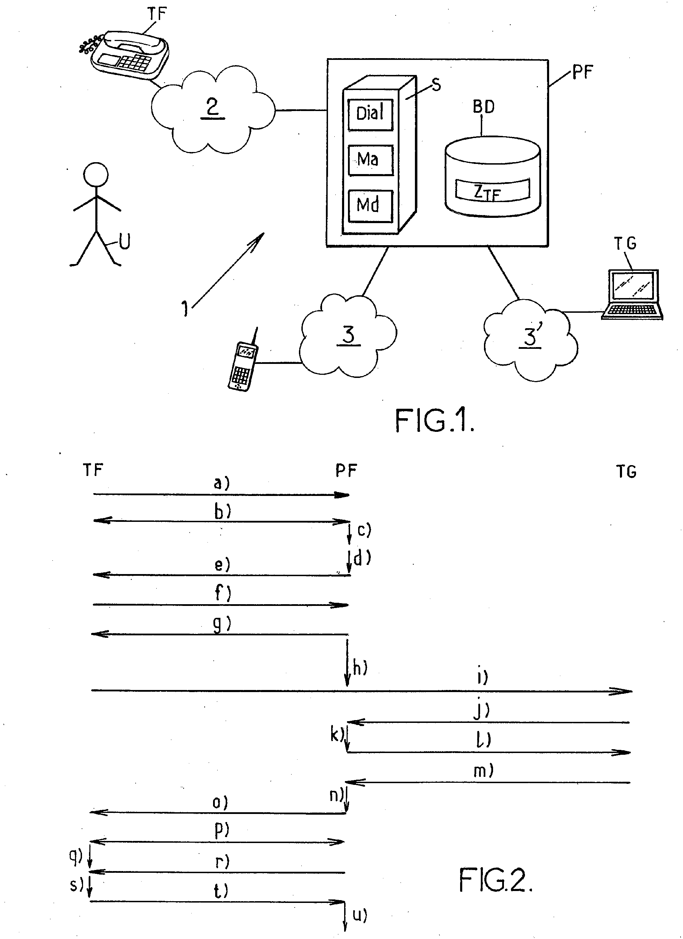

Sur la figure 1 est représenté un système 1 comportant un réseau de téléphonie fixe de type RTC (« Réseau Téléphonique Commuté ») reliant une pluralité de terminaux fixes et une plate-forme de services PF constituant une unité de commande à distance selon l'invention. Parmi la pluralité de terminaux fixes figure le téléphone fixe TF représenté sur la figure 1.

La plate-forme PF comporte un serveur S comportant un module de dialogue vocal interactif Dial, un module d'analyse Ma et un module de délégation Md et une base de données BD. Ces modules Dial, Ma et Md sont par exemple des modules logiciels.

Le module de dialogue vocal Dial comprend des moyens de synthèse et de reconnaissance vocales.

Le module d'analyse Ma du serveur S est adapté pour analyser la configuration matérielle d'un terminal d'utilisateur en cours de communication via le réseau fixe 2 avec la plate-forme PF, et pour en déduire la liste des paramètres stockés dans le terminal et qui sont aptes à être modifiés lors d'échanges entre le terminal et la plate-forme PF via le réseau fixe 2.

Le module de délégation Md du serveur S est adapté pour établir des profils de délégation des utilisateurs de téléphones du réseau fixe 1 et pour mettre en oeuvre des modifications de paramètres stockés dans un téléphone en fonction du profil de délégation établi pour l'utilisateur de ce téléphone

Le téléphone fixe TF est un terminal dont des paramètres mémorisés dans une mémoire locale au terminal TF sont exploités par ce dernier lors de son fonctionnement opérationnel.

L'utilisateur U du téléphone fixe TF souhaite déléguer la gestion de ces paramètres modifiables, par exemple à son fils, qui vit dans un lieu éloigné de la résidence de l'utilisateur U.

Selon une étape a), il appelle un numéro spécial à l'aide de son téléphone TF, ce qui établit un circuit de communication avec le module de dialogue vocal Dial de la plate-forme de services PF. Un dialogue s'ensuit alors, par lequel il est demandé à l'utilisateur U appelant de fournir, vocalement ou à l'aide des touches DTMF de son téléphone, des informations le concernant (nom, son numéro client du service de téléphonie fixe etc).

Les informations ainsi fournies par l'utilisateur U au module de dialogue vocal Dial sont délivrées au module d'analyse Ma. Ce dernier, dans une étape b), analyse alors la configuration matérielle du téléphone TF via le circuit de communication établi entre le terminal TF et la plate-forme PF dans le réseau fixe 2.

En fonction de cette analyse, le module d'analyse Ma détermine la liste L_{TF} des paramètres mémorisés dans le terminal aptes à être modifiés suite à des échanges via le réseau fixe 2 entre le terminal TF et la plate-forme PF. Il recueille en outre les valeurs actuellement mémorisées dans la mémoire du terminal TF pour ces paramètres (étape c)).

La liste L_{TF} ainsi déterminée comporte par exemple les paramètres suivants : « message vocal enregistré », « contacts du répertoire enregistrés », « type de sonnerie programmé » et « longueur de sonnerie programmé », « heure programmée », « touches mémos programmées ».

Cette liste L_{TF} et les valeurs actuellement mémorisées pour les paramètres de la liste sont enregistrées dans une zone mémoire Z_{TF} dédiée à l'utilisateur du téléphone TF et repérée par un identifiant de l'utilisateur du téléphone TF dans la base de données BD de la plate-forme PF (étape d)).

Le contenu de la liste L_{TF} est ensuite communiqué (étape e) à l'utilisateur U du téléphone TF par l'intermédiaire du module de dialogue vocal Dial, qui invite alors l'utilisateur U à sélectionner dans cette liste les paramètres dont il souhaite déléguer la gestion et à fournir des informations (nom, adresse, etc) concernant la personne physique à qui l'utilisateur souhaite déléguer cette gestion.

L'utilisateur indique alors au module de dialogue vocal Dial (étape f)) les paramètres sélectionnés et les informations requises relatives à la personne physique choisie pour la gestion de ces paramètres.

Dans le cas considéré, l'utilisateur U indique les paramètres « message vocal programmé » et « heure programmée » et il fournit les informations requises relatives à son fils.

Les paramètres sélectionnés par l'utilisateur U ainsi que les informations identifiant la personne à laquelle l'utilisateur délègue la gestion de ces paramètres sont transmis au module de délégation Md du serveur S.

Puis le module de délégation Md détermine en fonction de la liste L_{TF} des paramètres modifiables, des paramètres dans cette liste sélectionnés par l'utilisateur et des informations concernant la personne à laquelle la gestion de ces paramètres est déléguée, un nom d'utilisateur (« login ») identifiant et un mot de passe, qui sont d'une part communiqués à l'utilisateur du téléphone TF par l'intermédiaire du module de dialogue vocal Dial (étape g)) et qui sont d'autre part enregistrés dans la zone mémoire Z_{TF} en association avec les paramètres sélectionnés par l'utilisateur et avec les informations identifiant la personne à laquelle l'utilisateur délègue la gestion de ces paramètres, établissant ainsi le profil de délégation de l'utilisateur du téléphone TF (étape h).

Dans un mode de réalisation, le module de dialogue Dial propose en outre à l'utilisateur U de modifier le login et/ou le mot de passe. Au cas où l'utilisateur décide de changer l'un ou l'autre, il fournit vocalement ou à l'aide des touches DTMF, le nouveau login ou le nouveau mot de passe au module de dialogue vocal Dial, qui les communique ensuite au module de délégation Md pour mise à jour du profil enregistré dans la zone mémoire Z_{TF}.

Le circuit de communication établi entre l'utilisateur du téléphone TF et la plate-forme PF est libéré.

Le login, le mot de passe finalement retenus, la liste des paramètres modifiables associés (« message vocal enregistré » et « heure programmée ») à ces login et mot de passe et les différentes façons de joindre la plate-forme PF (site web, adresse courrier, numéro de téléphone) sont ensuite communiqués par l'utilisateur U à la personne, dans le cas présent son fils, qu'il a choisie pour gérer les paramètres, nommé ci-après gestionnaire délégué (étape i)). Dans un autre mode de réalisation, c'est la plate-forme PF qui se charge de faire parvenir au gestionnaire délégué ces éléments par email, courrier, communication téléphonique fixe ou mobile, SMS, etc. en fonction des informations fournies par l'utilisateur permettant de joindre son gestionnaire délégué.

Avantageusement, l'utilisateur peut désigner des personnes physiques différentes pour la gestion de sous-ensembles de paramètres respectifs de la liste L_{TF}. Le profil de délégation associé à l'utilisateur du téléphone TF dans la zone mémoire Z_{TF} est alors complété conformément aux choix de l'utilisateur, avec les informations pour chaque gestionnaire délégué supplémentaire, les sous-ensembles de paramètres et les mots de passe et logins associés.

Dans un autre mode de réalisation, le mot de passe et le login sont communiqués par courrier, ou email à l'utilisateur.

Les étapes a) à i) constituent les étapes préalables nécessaires à la fourniture effective du service de modification par délégation de paramètres du téléphone TF, offert par la plate-forme PF.

Par ailleurs, la zone de mémoire Z_{TF} dédiée à l'utilisateur du téléphone TF comporte un journal traçant l'historique relatif à la délégation de la gestion du paramétrage du téléphone TF.

Suite à la réalisation de ces étapes préliminaires, le journal est renseigné avec la date et l'heure d'appel de l'utilisateur du téléphone TF, le profil de délégation établi et les dates et heures des communications des login et mot de passe à l'utilisateur et/ou au(x) gestionnaire(s) délégués réalisées la cas échéant par la plate-forme PF.

La plate-forme PF est par ailleurs reliée à une pluralité de réseaux, en-dehors du réseau fixe 2, par exemple à un réseau mobile 3 de type GSM (« Global System for Mobile communications ») et à un réseau IP (« Internet Protocol) 3'.

Le gestionnaire délégué, une fois qu'il a reçu les mots de passe et login, a la possibilité de modifier les paramètres qu'il gère, notamment depuis un terminal fixe du réseau fixe 1, depuis un téléphone portable du réseau mobile 3 ou encore depuis un ordinateur connecté au réseau IP 3'.

Dans le cas présent, le gestionnaire délégué, le fils de l'utilisateur U décide de procéder aux réglages des paramètres dont il assure la gestion, par l'intermédiaire de son ordinateur TG relié au réseau IP 3' et représenté en figure 1.

Dans une étape j), il se connecte depuis cet ordinateur TG au site web associé à la plate-forme PF où il lui est demandé ses login et mot de passe pour accéder aux services offerts par la plate-forme PF.

Le gestionnaire délégué transmet ses login et mot de passe, permettant de l'identifier, par l'intermédiaire de son ordinateur TG à la plate-forme PF. Le module de délégation Md recevant ces éléments effectue une vérification de l'identité du gestionnaire à l'aide d'une phase d'authentification de ces login et mot de passe (étape k)), vérifiant que ces login et mot de passe correspondent à des login et mot de passe enregistrés dans une zone dédiée à un utilisateur dans la base de données BD.

Dans le cas positif, il extrait de la zone dédiée (ici la zone Z_{TF}) dans laquelle est enregistré ce couple login/mot de passe, la liste des paramètres modifiables associés à ce couple login/mot de passe (« message vocal enregistré » et « heure programmée ») et les valeurs actuellement présentes dans le téléphone pour ces paramètres (par exemple « absence de message vocal » et « absence d'heure »). Puis le module de délégation Md présente ces éléments au gestionnaire délégué par l'intermédiaire de son ordinateur TG en lui proposant de modifier la valeur de ces paramètres (étape I)).

A la réception de ces éléments, le gestionnaire délégué saisit alors par l'intermédiaire du clavier de son ordinateur TG un message d'accueil du type « vous êtes bien sur la boîte vocale de Monsieur U ; merci de laisser un message » destiné à la mise à jour du message vocal du téléphone TF et saisit une heure actualisée, puis transmet ces éléments à la plate-forme PF (étape m)).

Le module de délégation Md reçoit ces éléments, vérifie qu'ils sont compatibles avec des valeurs possibles respectivement d'un message vocal et de l'heure. En parallèle, le journal de la zone est mis à jour en indiquant les paramètres modifiés, les nouvelles valeurs indiquées pour ces paramètres, l'auteur de ces modifications, la date, le jour de modification (étape n)).

Puis le gestionnaire délégué se déconnecte ou par défaut la session de dialogue est fermée automatiquement au bout d'un certain temps d'inactivité.

Puis la plate-forme PF émet un appel téléphonique par l'intermédiaire du réseau fixe 2 à destination du téléphone TF (étape o)). L'utilisateur du téléphone TF accepte l'appel, et un circuit de communication du réseau fixe 2 est alors établi.

Le téléphone TF et la plate-forme PF échangent alors des données pour mettre à jour la valeur des paramètres de message vocal et d'heure conformément aux modifications indiquées par le fils de l'utilisateur U à la plate-forme PF.

Ainsi la nouvelle valeur de l'heure est communiquée par le module de délégation Md au téléphone TF (étape p)), puis ce dernier l'enregistre localement comme nouvelle valeur du paramètre « heure programmée » à la place de l'ancienne valeur « absence d'heure » (étape q)). Ensuite, le module de dialogue vocal Dial synthétise vocalement le message indiqué « vous êtes bien sur la boîte vocale de Monsieur U ; merci de laisser un message », transmet ce message vocal via le circuit de communication établi au téléphone TF (étape r) qui l'enregistre alors localement comme nouveau message vocal enregistré à la place de l'ancienne valeur « absence de message vocal » (étape s)).

Cette phase de connexion entre la plate-forme PF et le téléphone TF doit être la plus courte possible pour éviter le maintien de la ligne en état d'occupation pour mise à jour des paramètres du téléphone TF.

Une fois les enregistrements réalisés, le téléphone TF fournit, par l'intermédiaire du circuit de communication établi, à la plate-forme PF un compte-rendu listant les modifications réalisées avec succès (étape t)). En fonction de ce compte-rendu, le module de délégation Md met à jour le journal des modifications associé au téléphone TF, remplace les anciennes valeurs mémorisées dans la zone dédiée au téléphone TF pour les paramètres « message vocal enregistré» et « l'heure programmée » par les nouvelles valeurs enregistrées (étape u)). Ainsi la mise en oeuvre de la modification des paramètres opérationnels dans le téléphone TF comprend la synchronisation de la mémoire du téléphone TF avec la zone mémoire dédiée à celui-ci dans la base de données BD de la plate-forme PF.

Afin de mettre en oeuvre l'invention, avantageusement, lors de la connexion préalable du téléphone TF (étape a)), une application logicielle est téléchargée depuis la plate-forme PF, qui permet de conduire ensuite les échanges avec la plate-forme PF.

Dans un mode de réalisation, la communication avec le gestionnaire délégué peut être conservée jusqu'à ce que les opérations de mise à jour des paramètres stockés dans le téléphone TF soient terminées, que le compte-rendu soit émis par le téléphone TF et qu'un compte-rendu des opérations soit adressé par la plate-forme PF au gestionnaire délégué via son ordinateur TG.

Avantageusement, outre la délégation de gestion des paramètres opérationnels du téléphone TF mémorisés dans le téléphone, la plate-forme PF peut proposer la délégation du suivi de la facturation et de la consommation, en permettant également à des tiers de modifier le type de forfait, les options de renvois etc., qui ne sont pas des paramètres gérés localement.

Le terminal dont les paramètres sont modifiés dans le mode de réalisation décrit plus haut est un terminal fixe. Néanmoins, l'invention s'applique à tout type de terminaux.

Dans un mode de réalisation, la gestion à distance d'un terminal (le premier terminal) ne se fait pas par l'intermédiaire d'une plate-forme centrale du type de l'unité de commande à distance décrite en référence aux figures, mais directement depuis le terminal de la personne à laquelle la gestion des paramètres a été déléguée (le deuxième terminal), par exemple dans le cas décrit en référence à la figure 1, depuis le terminal TG. Les premier et deuxième terminaux sont chacun dotés de touches et d'un écran de visualisation avec un environnement d'affichage propre.

Dans ce cas, selon une première variante de prise en main directement par le deuxième terminal de la configuration des paramètres du premier terminal, le premier terminal transmet au deuxième terminal des informations correspondant aux paramètres opérationnels modifiables à distance et indiquant les valeurs actuelles de ces paramètres. Ces informations sont alors affichées sur l'écran du deuxième terminal suivant le mode d'affichage propre au deuxième terminal. Cette disposition permet à l'utilisateur du deuxième terminal de conserver son environnement d'affichage lorsqu'il visualise les paramètres opérationnels modifiables du premier terminal. L'utilisateur, à l'aide des touches du deuxième terminal, indique alors la ou les modifications à apporter à la valeur de ces paramètres. Des données représentatives de ces modifications indiquées sont alors transmises depuis le deuxième terminal au premier terminal pour mise en oeuvre de ces modifications au sein du premier terminal.

Dans une seconde variante de prise en main directement par le deuxième terminal de la configuration des paramètres du premier terminal, le contenu de l'écran de visualisation du premier terminal s'affiche dans une fenêtre, voire dans la totalité de l'écran du deuxième terminal. Cette disposition, lorsque les utilisateurs des premier et deuxième terminaux sont en communication, permet à l'utilisateur du deuxième terminal, de montrer à l'utilisateur du premier terminal, comment la modification souhaitée d'un paramètre opérationnel s'opère.

Dans un mode de réalisation, la réception, par le premier terminal, des données destinées à modifier les paramètres et envoyées par l'unité de commande à distance ou directement depuis le deuxième terminal, est transparente pour l'environnement, et notamment pour l'utilisateur, du premier terminal. Par exemple, les données sont transmises au cours d'une session de communication de type USSD (« Unstructured Supplementary Services Data ») ou encore la sonnerie du téléphone est désactivée lors de l'appel à destination du premier terminal.

Ainsi l'invention permet à un utilisateur d'un terminal de déléguer la gestion de paramètres opérationnels enregistrés dans le terminal, de façon modulable en fonction du type de terminal et en fonction des souhaits de délégation de l'utilisateur, tout en assurant un contrôle d'accès à ces paramètres.

## Revendications

1. Procédé de modification de paramètres opérationnels mémorisés dans une mémoire d'un premier terminal (TF), dans un réseau (2, 3, 3') comportant une pluralité de terminaux (TF, TG) et une unité de commande à distance (PF) comprenant une mémoire, le procédé comprenant les étapes préalables suivantes :
- détermination, par l'unité de commande, d'un ensemble de paramètres opérationnels modifiables parmi les paramètres opérationnels stockés dans le premier terminal, en fonction au moins d'une étape d'analyse de la configuration du premier terminal (TF) réalisée lors d'une connexion entre l'unité de commande à distance et ledit premier terminal, et
- mémorisation dudit ensemble de paramètres dans l'unité, en association avec l'identifiant du premier terminal et de l'ensemble de paramètres modifiables ;
le procédé comprenant les étapes suivantes :
- réception, par l'unité, de données comportant au moins une indication de modification, associée à l'identifiant du premier terminal, relative à au moins un paramètre opérationnel mémorisé dans ledit premier terminal, la « au moins une » indication étant fournie par un deuxième terminal ;
- mémorisation desdites données reçues dans la mémoire de l'unité ;
- commande par l'unité de commande de la modification indiquée ; et
- mémorisation dans la mémoire du premier terminal du paramètre opérationnel modifié conformément à l'indication de modification.

2. Procédé selon la revendication 1, selon lequel l'étape de commande de la modification comporte une étape de synchronisation entre la mémoire du premier terminal et la mémoire de l'unité de commande.

3. Procédé selon l'une quelconque des revendications précédentes, selon lequel la détermination de l'ensemble de paramètres opérationnels modifiables par l'unité de commande à distance est réalisée en fonction au moins de choix fournis par l'utilisateur du premier terminal à l'unité et indiquant les paramètres dont il souhaite déléguer la gestion.

4. Procédé selon l'une quelconque des revendications précédentes, selon lequel les données comportent en outre l'identification de l'utilisateur du deuxième terminal, le procédé comprenant une étape de vérification de ladite identification.

5. Procédé selon l'une quelconque des revendications précédentes, comprenant en outre une étape de mise à jour d'un journal de suivi des modifications relatives au premier terminal (TF) suite à la mémorisation d'une modification dans ledit terminal.

6. Unité de commande à distance (PF) pour la configuration de terminaux d'utilisateurs (TF), comprenant :
- des moyens de raccordement à un réseau (2, 3, 3') pour la mise en relation avec une pluralité de terminaux d'utilisateurs (TF, TG) ;
- des moyens de détermination d'un ensemble de paramètres opérationnels modifiables parmi des paramètres opérationnels stockés dans un premier des terminaux d'utilisateurs, en fonction au moins d'une étape d'analyse de la configuration du premier terminal (TF) réalisée lors d'une connexion entre l'unité de commande à distance et ledit premier terminal ;
- des moyens de mémorisation de l'ensemble de paramètres opérationnels modifiables déterminé, en association avec un identifiant dudit premier terminal ;
- des moyens de réception d'un identifiant et d'au moins une indication de modification relative à au moins un paramètre opérationnel mémorisé dans le premier terminal ; et
- des moyens de connexion pour connecter l'unité au premier terminal identifié par l'identifiant reçu et commander la modification indiquée dans le premier terminal.

7. Terminal (TF), comportant :
- des moyens de mémorisation de paramètres opérationnels ;
- des moyens de raccordement à un réseau (2, 3, 3') ; et
- des moyens pour permettre une analyse de la configuration du terminal par une unité distante connectée par l'intermédiaire du réseau ;
- des moyens pour mettre à jour, conformément à une indication de modification reçue par l'intermédiaire du réseau, au moins un paramètre opérationnel mémorisé dans les moyens de mémorisation.

8. Programme d'ordinateur à installer dans une unité de commande à distance (PF) pour exécution par un processeur de ladite unité, l'unité comportant des moyens de raccordement à un réseau (2, 3, 3') pour la mise en relation avec une pluralité de terminaux d'utilisateurs (TF, TG), le programme comprenant des instructions pour effectuer les traitements suivants lors d'une exécution du programme par le processeur :
- dans une étape préalable, détermination d'un ensemble de paramètres opérationnels modifiables parmi des paramètres opérationnels stockés dans un premier terminal, en fonction au moins d'une étape d'analyse de la configuration du premier terminal (TF) réalisée lors d'une connexion entre l'unité de commande à distance et ledit premier terminal ;
- réception d'un identifiant du premier terminal d'utilisateur et d'au moins une indication de modification relative à au moins un paramètre opérationnel mémorisé dans ledit premier terminal ;
- commande de la modification indiquée dans le premier terminal lors d'une connexion de l'unité de commande à distance au premier terminal identifié par l'identifiant reçu.
